# FASCICULE DE BREVET EUROPEEN

(11) **EP 3 969 819 B1**
(45) Date de publication et mention de la délivrance du brevet: **07.06.2023**
(21) Numéro de dépôt: 20723177.0
(22) Date de dépôt: 08.05.2020
(51) Int. Cl.: F24D 3/08, F24D 3/10, F24D 10/00, F24D 19/10, F25B 25/00, F25B 29/00, F24D 11/00

(54) **SYSTEME D'INTERCONNEXION HYDRAULIQUE POUR RESEAU THERMIQUE**
HYDRAULISCHES VERBINDUNGSSYSTEM FÜR WÄRMEAUSTAUSCHNETZ
HYDRAULIC INTERCONNECTION SYSTEM FOR THERMAL NETWORK

(30) Priorité: 13.05.2019 EP 19174042
(43) Date de publication de la demande: 23.03.2022
(73) Titulaire: Apterix SA, 1003 Lausanne (CH)
(72) Inventeur: ORLANDO, David, 1806 ST-LEGIER (CH)
(74) Mandataire: reuteler & cie SA
(86) Numéro de dépôt international: PCT/EP2020/062944
(87) Numéro de publication internationale: WO 2020/229368

(56) Documents cités:
- EP-A1- 1 992 882
- EP-A1- 2 354 677
- CH-A1- 712 729
- DE-A1- 19 616 885
- DE-U1-202015 004 569

## Description

La présente invention concerne un système d'interconnexion hydraulique pour réseaux de distribution d'énergie thermique, notamment des réseaux comprenant des pompes à chaleur couplées à un réseau de distribution à distance basse température. Le réseau de distribution d'énergie thermique peut notamment servir à l'alimentation en chaleur ou en froid de bâtiments, par exemple de bâtiments d'un quartier urbain, raccordés au réseau.

Il existe de nombreux modules de raccordement hydraulique pour pompes à chaleur, agencés pour distribuer, dans un circuit de chauffage classique d'un bâtiment, de l'eau chaude sanitaire et de l'eau chaude de chauffage du bâtiment. Certains modules hydrauliques comprennent également un échangeur de chaleur permettant de faire du refroidissement libre (connu sous le nom anglais « *free cooling* ») via un registre terrestre de type sonde verticales ou horizontales.

Les systèmes conventionnels ne permettent toutefois pas d'intégrer efficacement des réseaux de distribution d'énergie thermique à distance (appelés aussi des réseaux de chauffage à distance « CAD ») avec les réseaux d'énergie thermique locaux, tenant compte des différences de températures ainsi que les variations de température et des flux des fluides caloporteurs possibles entre les divers réseaux selon les conditions, par exemple les conditions d'usage, météorologiques, et géothermiques.

Notamment, la conciliation des réseaux de distribution d'énergie thermique à distance basse température (dite « réseau Anergie ») et des pompes à chaleur connectées sur ce réseau Anergie avec une grande résilience et une efficience maximale, n'est pas atteint par les systèmes existants. Pour une grande résilience et une efficience maximale, il est crucial de s'assurer que les températures moyennes de fonctionnement des registres terrestres sont positives afin d'éviter le gel du sous-sol, qui aurait des conséquences qui peuvent être très négatives sur le rendement et la résilience du dit réseau de distribution d'énergie thermique.

Un réseau Anergie comprend typiquement un tube dans lequel circule un fluide caloporteur connecté à une pluralité de clients consommateurs d'énergie et un ou plusieurs producteurs d'énergie. Il existe plusieurs façons de raccorder hydrauliquement les installations des clients ou producteurs au tube (aussi appelé « monotube ») du réseau d'Anergie. Le principe le plus simple est le circuit en série, ou le réseau monotube est raccordé en série sur les installations des clients consommateurs d'énergie. Un inconvénient de ce schéma est que les dernières installations auront potentiellement moins de chaleur. Un autre inconvénient est de pompage nécessaire à faire circuler l'eau sera importante à cause des pertes de charge linéique et singulière qui s'accumulent.

Un autre principe très utilisé aujourd'hui est le raccordement série avec vanne de by-pass qui permet de mieux transférer l'énergie de chaleur jusqu'aux derniers clients. Les pertes de charge du réseau et le coût additionnel du matériel restent malgré cela encore importants.

Des exemples de systèmes d'interconnexion hydrauliques pour des réseaux de distribution d'énergie thermique sont décrits dans CH712729A1 et EP2354677A1.

Un objet général de l'invention est de fournir un système d'interconnexion hydraulique pour réseaux de distribution d'énergie thermique qui pallie les inconvénients des systèmes existants.

Un premier objet particulier de l'invention est de permettre une intégration efficace et résiliant d'un réseau de distribution d'énergie thermique à distance basse température à un réseau d'énergie thermique local avec une pompe à chaleur, par exemple un réseau d'énergie thermique d'un bâtiment.

Un deuxième objet particulier de l'invention est de fournir un raccordement hydraulique permettent de raccorder hydrauliquement les installations des clients ou producteurs au tube du réseau d'Anergie présentant une haute efficience et une bonne résilience du réseau.

Des objets de l'invention sont réalisés par une unité d'interconnexion hydraulique selon la revendication 1.

Des objets de l'invention sont réalisés par un procédé de fonctionnement d'une unité d'interconnexion hydraulique selon la revendication 4.

Des objets de l'invention sont réalisés par un système de distribution d'énergie thermique d'un bâtiment selon la revendication 12.

Les revendications dépendantes décrivent des caractéristiques avantageuses de l'invention.

Dans la présente, on décrit une unité d'interconnexion hydraulique pour un système de distribution d'énergie thermique d'un bâtiment connecté à un réseau de distribution à distance d'énergie thermique basse température (« réseau anergie monotube »), le bâtiment comprenant un réseau de distribution d'énergie thermique haute température (« réseau HT), un réseau d'eau chaude bâtiment et une pompe à chaleur. L'unité d'interconnexion hydraulique comprend:
- un échangeur de chaleur;
- un circuit de connexion haute température passant à travers l'échangeur de chaleur et comprenant une entrée et une sortie;
- un circuit de connexion basse température comprenant une entrée et une sortie ;
- un circuit de connexion chauffage comprenant une entrée et une sortie; et
- un circuit de connexion pompe à chaleur comprenant un circuit évaporateur avec une entrée et une sortie et un circuit condenseur avec une entrée et une sortie , l'entrée du circuit de connexion chauffage étant connecté à la sortie du circuit de connexion pompe à chaleur, l'entrée du circuit évaporateur étant connecté à la sortie du circuit de connexion basse température.

L'unité d'interconnexion hydraulique comprend en outre :
- une première vanne mélangeuse interconnectant l'entrée du circuit de connexion basse température à l'entrée du circuit de connexion haute température et à la sortie du circuit évaporateur de sorte à pouvoir injecter du fluide caloporteur venant du circuit de connexion basse température dans le circuit de connexion haute température, et
- une deuxième vanne mélangeuse interconnectant l'entrée du circuit de connexion chauffage, via une dérivation passant par l'échangeur de chaleur, et l'entrée du circuit condenseur, à la sortie du circuit de connexion chauffage afin de pouvoir injecter du fluide caloporteur passant par l'échangeur de chaleur avec le fluide caloporteur retournant du circuit condenseur.

Dans une forme d'exécution avantageuse, le circuit évaporateur comprend une pompe installé dans l'unité d'interconnexion hydraulique pour la circulation du fluide caloporteur du circuit évaporateur.

Dans une forme d'exécution avantageuse, le circuit condenseur comprend une pompe installé dans l'unité d'interconnexion hydraulique pour la circulation du fluide caloporteur du circuit condenseur.

Dans la présent, on décrit aussi un procédé de fonctionnement d'une unité d'interconnexion hydraulique, comprenant plusieurs modes de fonctionnement, un mode de fonctionnement comprenant la production d'eau chaude pour le réseau d'eau chaude bâtiment, dans lequel le circuit de connexion basse température est raccordé au réseau anergie qui fournit l'énergie nécessaire au circuit évaporateur de la pompe à chaleur, le circuit condenseur de la pompe à chaleur portant la température du fluide caloporteur du réseau d'eau chaude bâtiment à la température souhaitée pour permettre d'atteindre une consigne de température choisie, la première vanne mélangeuse étant dans une position dans laquelle la déviation du fluide caloporteur du circuit de connexion basse température à travers l'échangeur de chaleur est fermée, et la deuxième vanne mélangeuse étant dans une position dans laquelle la déviation du fluide caloporteur du circuit de connexion chauffage à travers l'échangeur de chaleur est fermée.

Dans une forme d'exécution avantageuse, un mode de fonctionnement comprend la production d'eau chaude pour le réseau d'eau chaude bâtiment en utilisant le réseau de distribution d'énergie thermique haute température, le transfert énergétique étant réalisé par l'intermédiaire de l'échangeur de chaleur, le transfert thermique étant contrôlé par la modulation de vitesse d'une pompe de circulation du circuit d'eau de chauffage et/ou la modulation de vitesse d'une pompe de circulation du fluide caloporteur du circuit HT.

Dans une forme d'exécution avantageuse, un mode de fonctionnement comprend la production d'eau chaude pour le réseau d'eau chaude bâtiment avec une mode sécurité lorsque la température du réseau anergie est inférieure à 0°C, les deux vannes mélangeuses étant pilotés par un système de mesure, contrôle, et régulation (MCR) connecté électriquement à l'unité d'interconnexion hydraulique pour ajuster le transfert thermique du circuit condenseur de la pompe à chaleur au circuit évaporateur par l'entremise de l'échangeur de chaleur afin de maintenir une température du fluide caloporteur à la sortie du circuit évaporateur à une température constante, le débit des deux fluides caloporteurs du circuit condenseur et du circuit évaporateur étant ajustés pour permettre d'obtenir ladite température.

Dans une forme d'exécution avantageuse, un mode de fonctionnement comprend un rafraichissement naturel sans le fonctionnement de la pompe à chaleur (« free cooling »), selon lequel la production d'eau froide nécessaire au circuit de connexion chauffage est amenée du réseau anergie, le fluide caloporteur du circuit de connexion basse température couplé au réseau anergie étant dévié, au moins en partie, par la deuxième vanne mélangeuse à travers l'échangeur de chaleur, et le fluide caloporteur du circuit de connexion chauffage est dévié, au moins en partie, par la première vanne mélangeuse à travers l'échangeur de chaleur, le débit des deux fluides caloporteurs étant ajustés pour permettre d'obtenir la température de consigne souhaitée.

Dans une forme d'exécution avantageuse, un mode de fonctionnement comprend la production de froid via le réseau de distribution d'énergie thermique haute température couplé à une source de froid, le transfert énergétique étant réalisé par l'intermédiaire de l'échangeur de chaleur et contrôlé par la modulation de vitesse d'une pompe de circulation du circuit d'eau de chauffage et/ou la modulation de vitesse d'une pompe de circulation du fluide caloporteur du circuit HT.

Dans une forme d'exécution avantageuse, un mode de fonctionnement comprend la production d'eau chaude pour le réseau d'eau chaude bâtiment en utilisant le réseau de distribution d'énergie thermique haute température en combinaison avec la pompe à chaleur, le fluide caloporteur du réseau de distribution d'énergie thermique haute température étant injecté dans le circuit évaporateur de la pompe à chaleur, le circuit ce connexion basse température couplé au réseau anergie étant en marche.

Dans une forme d'exécution avantageuse, un mode de fonctionnement comprend la production d'eau chaude pour le réseau d'eau chaude bâtiment en utilisant le réseau de distribution d'énergie thermique HT en combinaison avec la pompe à chaleur, le gradient de température du fluide caloporteur provenant du réseau HT étant plus élevé que le gradient de température produit par la pompe à chaleur, le transfert thermique via l'échangeur de chaleur étant contrôlé avec la modulation de la deuxième vanne mélangeuse.

Dans une forme d'exécution avantageuse, un mode de fonctionnement comprend la production d'eau chaude pour le réseau d'eau chaude bâtiment en utilisant le réseau de distribution d'énergie thermique HT en combinaison avec la pompe à chaleur pour alimenter un autre bâtiment, une partie de l'énergie nécessaire au réseau HT étant produite par la pompe à chaleur, le gradient de température du fluide caloporteur provenant du réseau HT étant moins élevé que le gradient produit par la pompe à chaleur, le transfert thermique via l'échangeur de chaleur étant contrôlé avec la modulation de la deuxième vanne mélangeuse.

Dans la présente, selon un deuxième aspect de l'invention, on décrit un système de connexion d'un circuit hydraulique d'un réseau anergie à une unité d'interconnexion hydraulique d'un bâtiment, via un échangeur de chaleur, comprenant un dispositif de branchement comportant deux raccords de branchement trois voies interconnectant un tube principal du réseau anergie à deux tubes de branchement connectés hydrauliquement à l'échangeur de chaleur, le raccord de branchement trois voies comprenant une partie de tube en ligne montée en ligne avec le tube principal du réseau anergie et une partie de tube en angle orienté de tel façon que le sens du fluide caloporteur du réseau anergie ait un angle de dérivation de sortie du tube principal, respectivement d'entrée dans le tube principal, entre 30 degrés et 60 degrés, de préférence environ 45 degrés.

Dans une forme d'exécution avantageuse, le système comprend une vanne d'arrêt sur au moins une desdites tubes de branchement.

Dans la présente, le système de distribution d'énergie thermique d'un bâtiment comprend unité d'interconnexion hydraulique comme décrit ci-dessus et un système de connexion d'un circuit hydraulique comme décrit ci-dessus.

Dans une forme d'exécution avantageuse, le système de distribution d'énergie thermique comprend en outre un système de mesure, contrôle, et régulation (MCR) connecté électriquement à l'unité d'interconnexion hydraulique pour commander des pompes et vannes de l'unité d'interconnexion hydraulique en fonction de températures mesurés et des consignes de commande d'opération du système.

D'autres buts et aspects avantageux de l'invention apparaîtront à la lecture des revendications et/ou de la description détaillée ci-après de formes d'exécution de l'invention en relation avec les figures, dans lesquelles :
La Fig. 1 est une vue schématique d'un système de distribution d'énergie thermique comprenant une unité d'interconnexion hydraulique selon une forme d'exécution de l'invention ;
La Fig. 1a est une vue schématique d'une portion de circuit d'interface entre un réseau de distribution à distance d'énergie thermique basse température (réseau Anergie) et une unité d'interconnexion hydraulique selon une forme d'exécution de l'invention ;

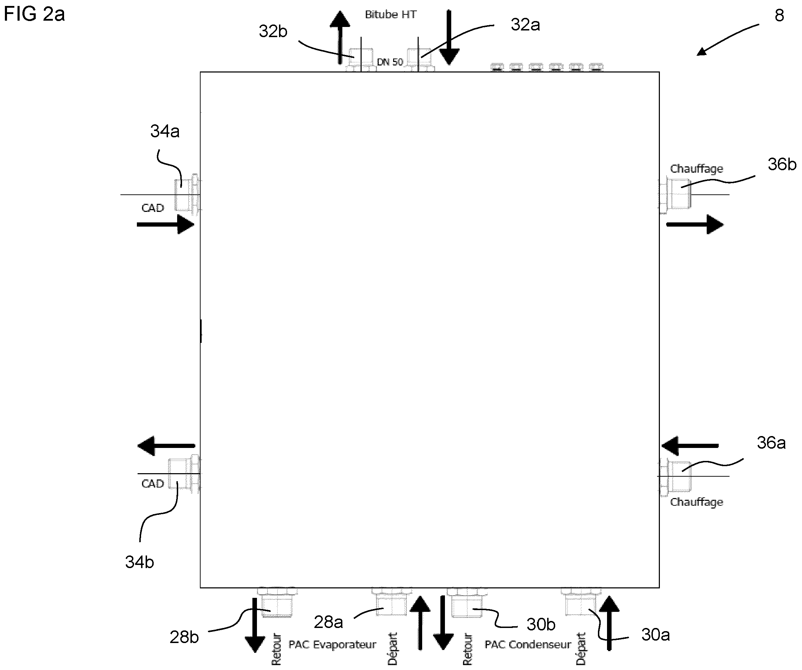

La Fig. 2a est une vue schématique d'une unité d'interconnexion hydraulique selon une forme d'exécution de l'invention, illustrant les entrées et sorties ;

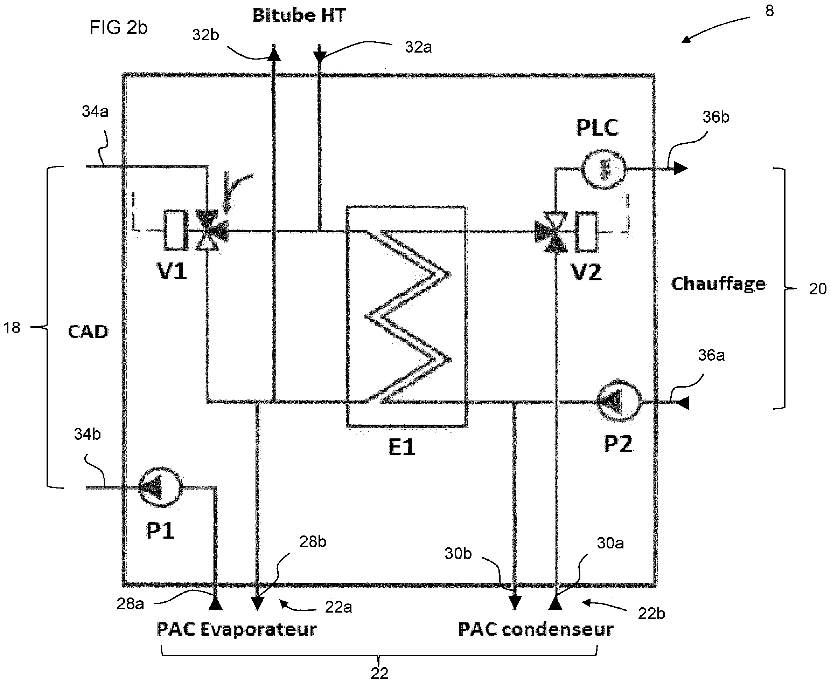

La Fig. 2b est une vue schématique d'une unité d'interconnexion hydraulique selon une forme d'exécution de l'invention, illustrant schématiquement le circuit hydraulique du système ;
Les Figs. 3a à 3h sont des vues de l'unité d'interconnexion hydraulique des figures 2a et 26, illustrant différentes modes d'opération du système selon des formes d'exécution de l'invention ;
La Fig. 4 est une vue d'un dispositif de branchement hydraulique pour le raccordement d'un monotube à une installation consommateur selon une forme d'exécution de l'invention ;
Les Figs. 5a à 5b sont des schémas simplifiés illustrant des modes d'opération du dispositif de branchement hydraulique de la figure 4 ;
La figure 6a illustre un exemple d'une vanne mélangeuse trois voies utilisée dans une unité d'interconnexion hydraulique selon une forme d'exécution de l'invention ;
La figure 6b illustre les débits des circuits de la vanne de la figure 6a en fonction de la position de la vanne.

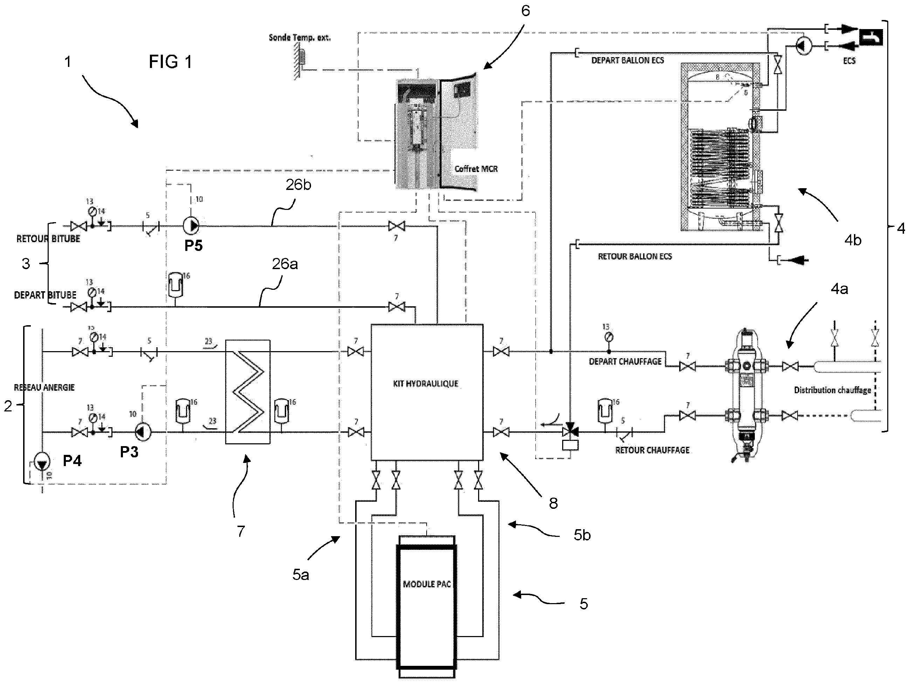

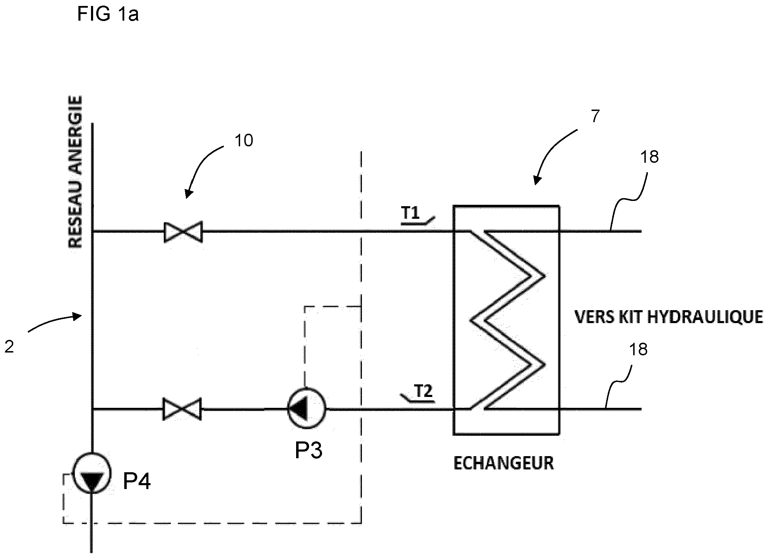

Faisant référence aux figures, commençant par la figure 1, un système de distribution d'énergie thermique 1 comprend une unité d'interconnexion hydraulique 8 connectée hydrauliquement à un réseau de distribution à distance d'énergie thermique basse température 2, appelé réseau Anergie, un réseau de distribution d'énergie thermique haute température 3, un réseau d'eau chaude bâtiment 4, et une pompe à chaleur 5. Le système de distribution d'énergie thermique 1 comprend en outre un système de mesure, contrôle, et régulation (système MCR) 6 connecté électriquement à l'unité d'interconnexion hydraulique 8 pour, entre autres, commander des pompes et vannes de l'unité d'interconnexion hydraulique.

Le système de distribution d'énergie thermique 1 peut comprendre en outre un échangeur de chaleur 7 couplant le réseau Anergie 2 à l'unité d'interconnexion hydraulique 8.

La pompe à chaleur comprend un circuit évaporateur 5a et un circuit condenseur 5b. Le circuit évaporateur 5a est la partie basse pression de la pompe à chaleur et le circuit condenseur 5b est la partie haute pression de la pompe à chaleur. La pompe à chaleur peut être une pompe à chaleur géothermique, ou une pompe à chaleur à aire.

Le circuit évaporateur 5a comprend une entrée 28a et une sortie 28b, connectés au réseau Anergie 2 via échangeur de chaleur 7, ainsi qu'au réseau HT 3.

Le circuit condenseur 5b comprend une entrée 30a et une sortie 30b, connectés au réseau d'eau chaude bâtiment 4.

Le réseau Anergie 2 comprend au moins un tube, que nous appelons ici « monotube », dans lequel circule un fluide caloporteur entre au moins un émetteur de chaleur et une pluralité de consommateurs de chaleur situés à distance de l'émetteur. Le réseau Anergie 2 est typiquement un réseau urbain interconnectant une pluralité de bâtiments d'un quartier résidentiel ou industriel, ou d'un quartier mixte résidentiel et industriel. Le réseau Anergie est en grande partie enterré et peut utiliser le sol pour accumuler de l'énergie thermique, par exemple dû à la production de chaleur solaire en été ou pour un refroidissement de bâtiments, ou pour libérer de l'énergie thermique, par exemple en hiver pour le chauffage des bâtiments ou de l'eau sanitaire. Les réseaux de distribution à distance d'énergie thermique basse température 2 de ce type sont en soi connus et n'ont pas besoin d'être décrit en détail dans la présente.

Le réseau Anergie 2 peut avantageusement être couplé à l'unité d'interconnexion hydraulique 8 par un échangeur de chaleur 7, de sorte à ce que le fluide caloporteur du réseau Anergie est indépendant du fluide caloporteur circulant dans l'unité d'interconnexion hydraulique 8.

Le fluide caloporteur circulant dans le réseau Anergie 2 peut typiquement être de l'eau ou de la saumure. La saumure permet au réseau Anergie de circuler le fluide caloporteur à des températures inférieures à 0°C.

Le fluide caloporteur circulant dans l'échangeur de chaleur 7 du côté de l'unité d'interconnexion hydraulique 8, et qui circule aussi dans un circuit évaporateur 5a de la pompe à chaleur 5 et dans le réseau HT 3, doit pouvoir supporter des températures inférieures à 0°C et supérieures à la température du réseau HT 3, notamment dans une gamme de températures allant typiquement de -20°C à 90°C. Ce fluide peut par exemple être de l'eau glycolée, bien connu dans les systèmes thermiques.

Le réseau de distribution d'énergie thermique haute température 3 comprend au moins deux tubes 26a, 26b dans lequel circule, en circuit fermé, un fluide caloporteur entre l'unité d'interconnexion hydraulique 8 et une source de chaleur haute température (HT), telle qu'un générateur thermique photovoltaïque, solaire, ou à combustible. La source de chaleur HT peut être une source de chaleur local, à savoir une source d'énergie généré dans le bâtiment dans lequel se trouve l'unité d'interconnexion hydraulique 8, ou une source de chaleur à distance, par exemple résultant d'une opération industrielle, telle qu'une usine de transformation de matériaux, ou d'un central de production d'énergie. Dans ce dernier cas, le circuit fermé du réseau HT connecté à l'unité d'interconnexion hydraulique, peut être couplé à la source de chaleur produit à distance par un échangeur de chaleur (variante non-illustrée), de sorte à ce que circuit fermé du réseau HT 3 soit disposé localement (dans le bâtiment dans lequel l'unité d'interconnexion est montée, de préférence proche de l'unité d'interconnexion 8)

Le réseau d'eau chaude bâtiment 4 peut typiquement comprendre un réseau de chauffage bâtiment 4a et un réseau d'eau chaude sanitaire (réseau ECS) 4b, qui peut par exemple comprendre un (ou plusieurs) ballon(s) pour le stockage d'eau chaude sanitaire. Le ballon ECS peut en outre comprendre un élément de chauffage électrique pour un chauffage d'appoint de l'eau chaude sanitaire stockée dan le ballon ECS. La distribution d'eau chaude circulant dans le réseau de chauffage bâtiment 4a et le réseau ECS 4b peut être contrôlée par des vannes dans le réseau en dehors de l'unité d'interconnexion hydraulique 8. Les circuits du réseau de chauffage bâtiment 4a et du réseau ECS 4b peuvent aussi être indépendants hydrauliquement l'un de l'autre, par exemple en couplant le circuit de chauffage avec le circuit ECS par un échangeur de chaleur (variante non-illustrée).

Le système MCR 6 est typiquement et de préférence installé dans le bâtiment dans lequel l'unité d'interconnexion est montée, et est connecté à divers sondes de température (y compris une sonde extérieure) et aux divers unités du système de distribution d'énergie thermique dans le bâtiment, pour la régulation de l'unité d'interconnexion hydraulique 8 et la pompe à chaleur 5 ainsi que des vannes et pompes du réseau d'eau chaude bâtiment 4, réseau HT 3 et circuit de connexion basse température 18 couplé au réseau Anergie 2.

L'unité d'interconnexion hydraulique 8 comprend un échangeur de chaleur 14, un circuit de connexion haute température 16 comprenant une entrée 32a et une sortie 32b, un circuit de connexion basse température 18 comprenant une entrée 34a et une sortie 34b, un circuit de connexion chauffage 20 comprenant une entrée 36a et une sortie 36b, et un circuit de connexion pompe à chaleur 22. Le circuit de connexion pompe à chaleur, comme mentionné précédemment, comprend un circuit évaporateur 22a avec une entrée 28a et une sortie 28b et un circuit condenseur 22b avec une entrée 30a et une sortie 30b.

L'utilisation des termes « entrée » et « sortie » ci-dessus indique l'entrée de fluide, respectivement la sortie de fluide de l'unité d'interconnexion hydraulique.

Le terme «circuit de connexion» utilisé dans la présente description peut comprendre seulement une petite portion de conduit, ou plusieurs portions de conduit, un «circuit de connexion» étant défini principalement par son entrée et sa sortie de l'unité d'interconnexion hydraulique.

L'unité d'interconnexion hydraulique 8 comprend en outre des vannes mélangeuses V1, V2.

Une vanne mélangeuse V1 interconnecte l'entrée 34a du circuit de connexion basse température 18 à l'entrée 32a du circuit de connexion haute température 16 et à la sortie 28b du circuit évaporateur 28b de sorte à pouvoir injecter du fluide caloporteur venant du réseau basse température 18 dans le réseau HT 3 passant à travers l'échangeur de chaleur 14, de sorte à diminuer le transfert d'énergie au circuit de connexion chauffage 20 et à augmenter l'énergie conservé dans le circuit évaporateur 22a.

Une deuxième vanne mélangeuse V2 interconnecte l'entrée 36a du circuit de connexion chauffage 20, via une dérivation 38 passant par l'échangeur de chaleur 14, et l'entrée 30a du circuit condenseur 22b de la pompe à chaleur 5, à la sortie 36b du circuit de connexion chauffage 20 afin de pouvoir injecter du fluide caloporteur passant par l'échangeur de chaleur 14 avec le fluide caloporteur retournant du circuit condenseur de la pompe à chaleur.

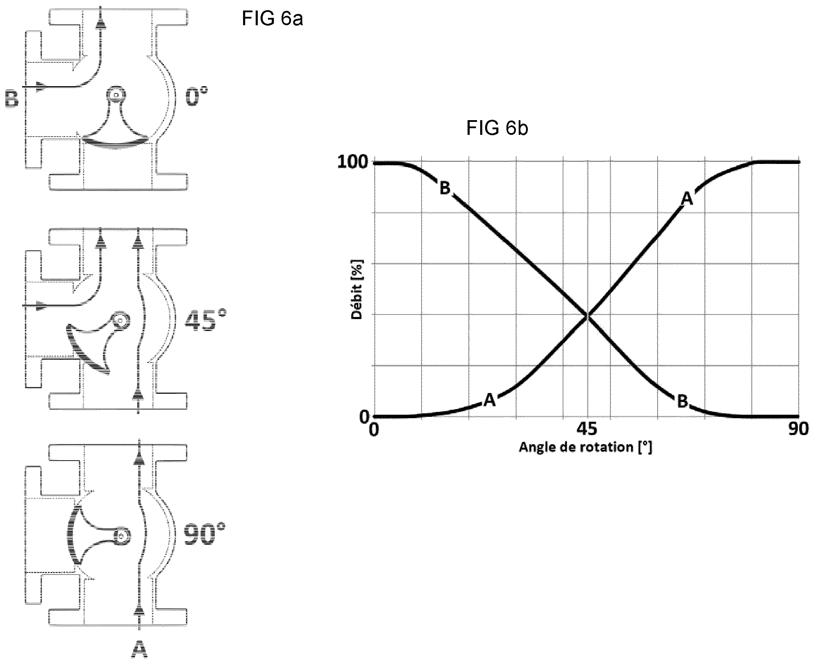

Un exemple d'une vanne mélangeuse trois voies est illustré dans la figure 6a, montrant trois positions différentes de la vanne : (i) circuit A connecté avec la sortie avec circuit B fermé (90°), (ii) circuit B connecté avec la sortie avec circuit A fermé (0°) et (iii) les deux circuits A, B connectés avec la sortie (45°) pour un mélange des flux des deux circuits. La figure 6b illustre les débits des circuits A et B en fonction de la position de la vanne.

Les circuits évaporateur 22a et condenseur 22b peuvent comprendre chacun une pompe P1, P2 installé dans l'unité d'interconnexion hydraulique pour la circulation du fluide caloporteur. Les pompes peuvent toutefois, dans une variante, aussi être disposés en dehors de l'unité d'interconnexion hydraulique 8.

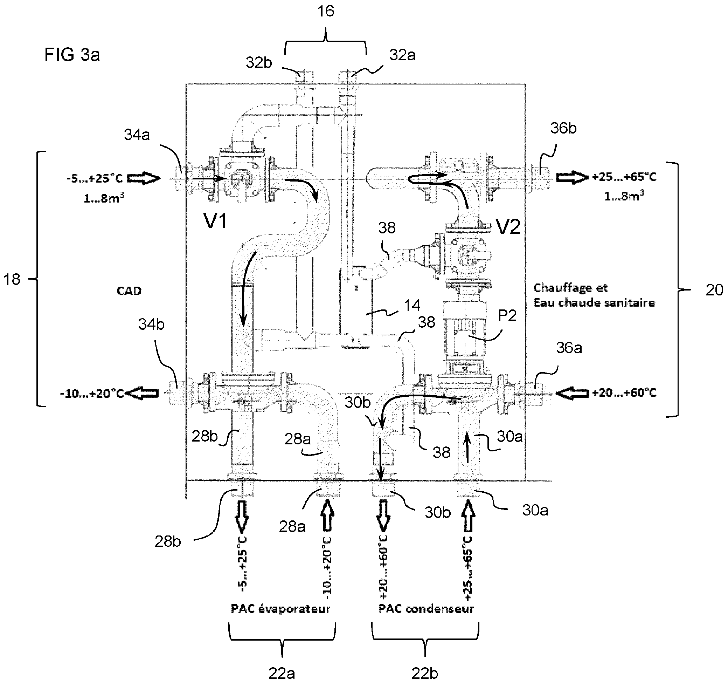

Faisant référence à la figure 3a, dans une première mode de fonctionnement il y a la production de chauffage et de production d'eau chaude sanitaire. Le circuit de connexion basse température 18 est raccordé au réseau Anergie 2 qui fournit l'énergie nécessaire au circuit évaporateur 22a de la pompe à chaleur 5. Le circuit condenseur 22b de la pompe à chaleur porte la température du fluide caloporteur du réseau d'eau chaude bâtiment 4 à la température souhaitée pour permettre d'atteindre la consigne de température choisie. Cela va de même pour l'obtention de la température souhaitée pour la production de l'eau chaude sanitaire. Dans ce mode, la vanne mélangeuse V1 est dans une position dans laquelle la déviation du fluide caloporteur du circuit de connexion basse température 18 à travers l'échangeur de chaleur 14 est fermée, et la vanne mélangeuses V2 est dans une position dans laquelle la déviation du fluide caloporteur du circuit de connexion chauffage 20 à travers l'échangeur de chaleur 14 est fermée.

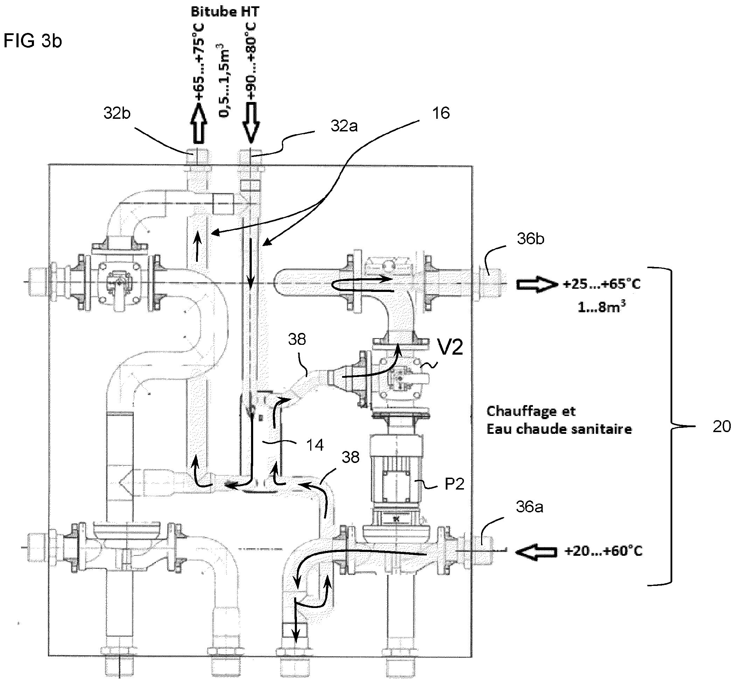

Faisant référence à la figure 3b, dans une deuxième mode de fonctionnement il y a le chauffage par le réseau de distribution d'énergie thermique haute température 3 du réseau d'eau chaude bâtiment 4. Dans ce mode de fonctionnement, l'énergie nécessaire pour l'eau de chauffage du bâtiment et l'eau chaude sanitaire est produite par une autre unité que la pompe à chaleur. Le transfert énergétique est réalisé par l'intermédiaire de l'échangeur de chaleur 14, le transfert thermique étant contrôlé par la modulation de vitesse de la pompe P2 de circulation du circuit d'eau de chauffage et/ou la modulation de vitesse d'une pompe P5 (voir fig. 1) de circulation du fluide caloporteur du circuit HT 3.

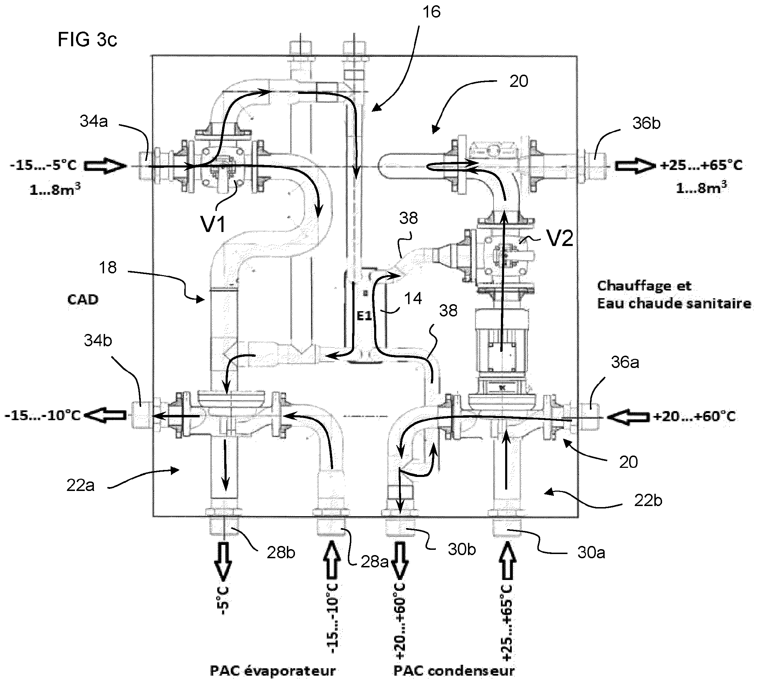

Faisant référence à la figure 3c, dans une troisième mode de fonctionnement il y a le chauffage d'eau de chauffage et d'eau chaude sanitaire avec une mode sécurité lorsque la température du réseau Anergie 2 est inférieure à 0°C. Dans ce cas, les deux vannes mélangeuses V1, V2, sont pilotés par un automate programmable du MCR 6 pour ajuster le transfert thermique du circuit condenseur 5b de la pompe à chaleur au circuit évaporateur 5a par l'entremise de l'échangeur de chaleur 14 afin de maintenir une température du fluide caloporteur à la sortie 28b à une température constante, par exemple à une température de - 5°C. Le débit des deux fluides caloporteurs seront ajustés pour permettre d'obtenir la température de consigne souhaitée. Dans ce mode de fonctionnement, le circuit ce connexion haute température 16 peut être en arrêt (i.e. la pompe P5 est à l'arrêt et il n'y a pas de circulation de fluide caloporteur à haute température).

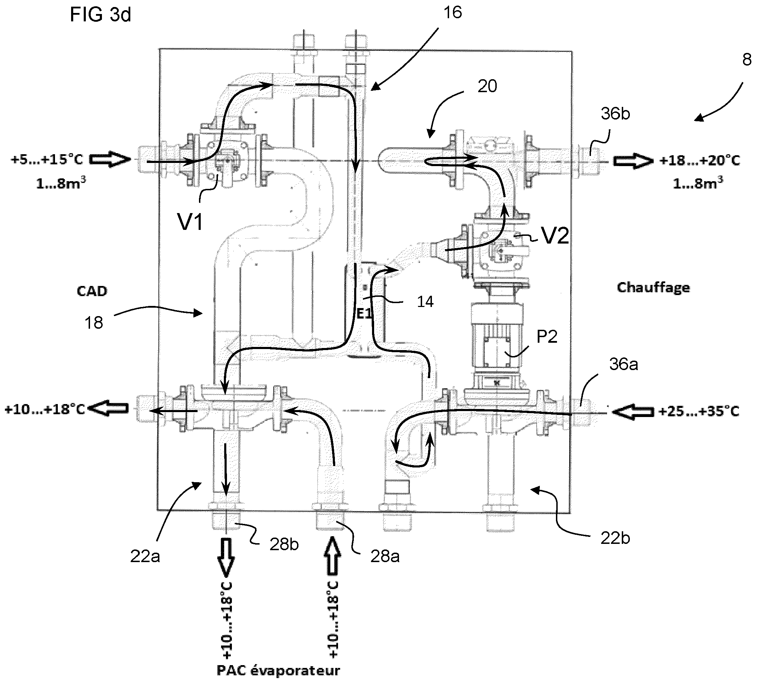

Faisant référence à la figure 3d, dans une quatrième mode de fonctionnement il y a un rafraichissement naturel sans le fonctionnement de la pompe à chaleur (« *free cooling* »). La production d'eau froide nécessaire au circuit de connexion chauffage et amenée du réseau anergie dont ladite température est inférieure en été à la température de l'air extérieure et ainsi permettre un transfert de la chaleur du réseau d'eau chaude bâtiment 4 au réseau anergie 2. Les deux vannes mélangeuses V1, V2 via leur commande progressive piloté par un automate programmable vont ajuster le transfert thermique par l'entremise de l'échangeur de chaleur 14. Le fluide caloporteur du circuit de connexion basse température 18 couplé au réseau Anergie 2 est dévié, au moins en partie, par la vanne mélangeuse V2 à travers l'échangeur de chaleur 14, et le fluide caloporteur du circuit de connexion chauffage 20 est dévié, au moins en partie, par la vanne mélangeuse V1 à travers l'échangeur de chaleur 14. Le débit des deux fluides caloporteurs sont ajustés pour permettre d'obtenir la température de consigne souhaitée. Dans ce mode de fonctionnement, le circuit de connexion haute température 16 est à l'arrêt, et la pompe à chaleur 5 est à l'arrêt.

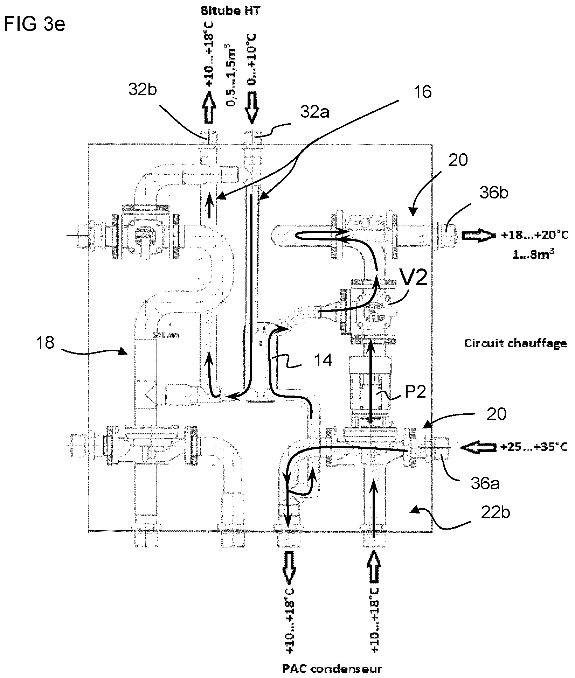

Faisant référence à la figure 3e, dans une cinquième mode de fonctionnement il y a la production de froid via le réseau de distribution d'énergie thermique haute température 3. Dans ce mode de fonctionnement, la production d'eau froide nécessaire au réseau d'eau chaude bâtiment 4 est produite, au moins en partie, par une source de froid venant du réseau de distribution d'énergie thermique haute température 3, non pas de la pompe à chaleur. Le transfert énergétique est réalisé par l'intermédiaire de l'échangeur de chaleur 14. Le transfert thermique peut être contrôlé par la modulation de vitesse de la pompe P2 de circulation du circuit d'eau de chauffage et/ou la modulation de vitesse de la pompe P5 (voir fig. 1) de circulation du fluide caloporteur du circuit HT 3. Dans ce mode de fonctionnement, le circuit ce connexion basse température 18 couplé au réseau Anergie 2 peut être à l'arrêt, et la pompe à chaleur 5 est à l'arrêt. Il est également possible, dans une variante, de faire fonctionner le circuit basse température 18 (comme pour le mode « free cooling ») en plus du réseau HT.

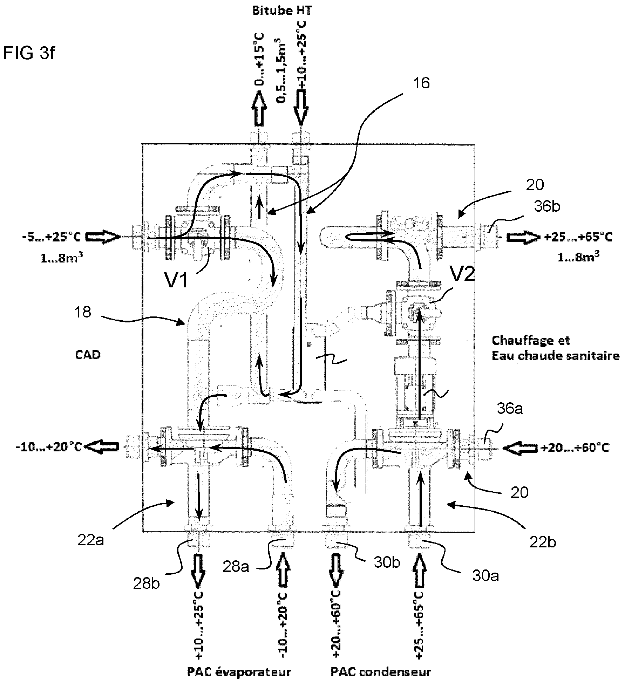

Faisant référence à la figure 3f, dans une sixième mode de fonctionnement il y a la production d'eau de chauffage et d'eau chaude sanitaire en utilisant le réseau de distribution d'énergie thermique haute température 3 en combinaison avec la pompe à chaleur 5, ce qui permet de produire plus de chaleur que la puissance nominale de la pompe à chaleur 5. Le fluide caloporteur du réseau de distribution d'énergie thermique haute température 3 est injecté dans le circuit évaporateur de la pompe à chaleur, ce qui permet d'augmenter l'énergie transféré du circuit évaporateur au circuit condenseur. Dans ce mode de fonctionnement, le circuit ce connexion basse température 18 couplé au réseau Anergie 2 est en marche.

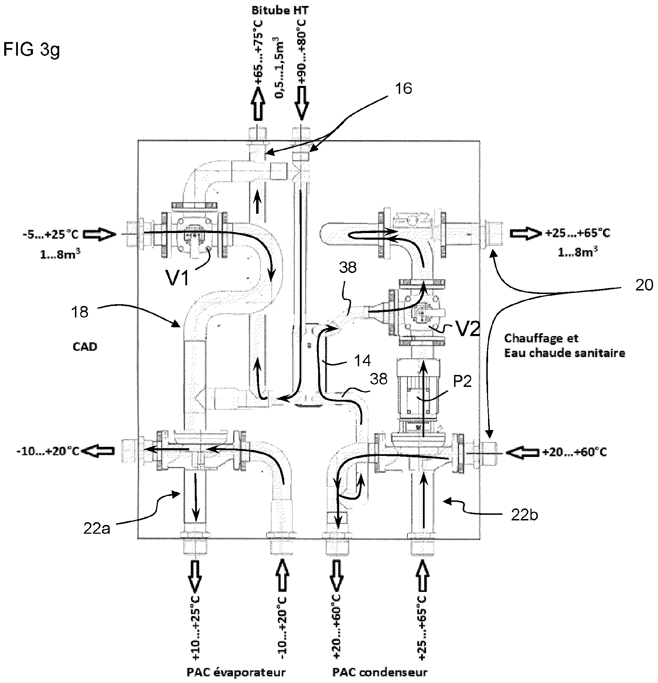

Faisant référence à la figure 3g, dans une septième mode de fonctionnement il y a la production de d'eau de chauffage et d'eau chaude sanitaire en utilisant le réseau de distribution d'énergie thermique haute température 3 en combinaison avec la pompe à chaleur 5, dans lequel le gradient de température du fluide caloporteur provenant du réseau HT 3 est plus élevé que le gradient de température produit par la pompe à chaleur. Le transfert est fait via l'échangeur de chaleur 14 avec la modulation de la vanne mélangeuse V2. Avec cette combinaison il est possible de produire plus de chaleur que la puissance nominale de la pompe à chaleur 5.

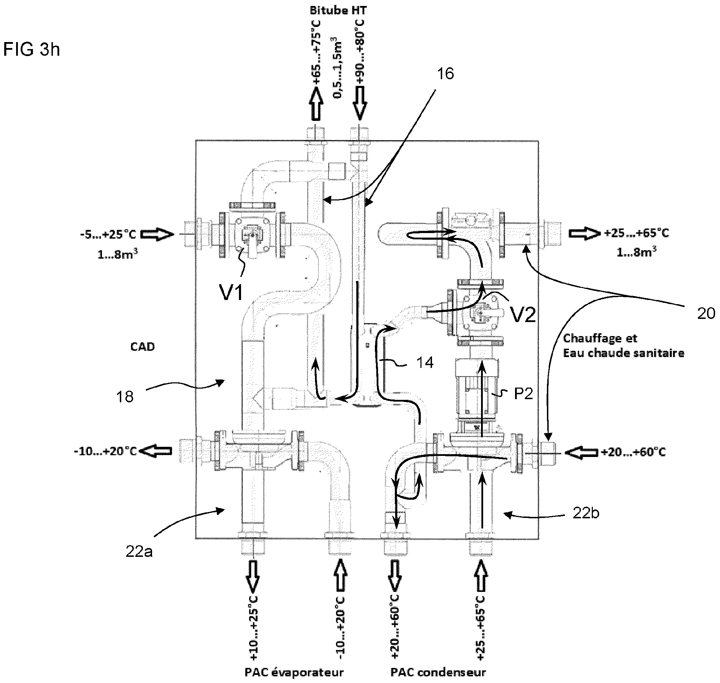

Faisant référence à la figure 3h, dans une huitième mode de fonctionnement il y a la production de d'eau de chauffage et d'eau chaude sanitaire en utilisant le réseau de distribution d'énergie thermique haute température 3 en combinaison avec la pompe à chaleur 5 pour alimenter un autre bâtiment ou unité défectueuse (mode dite « maitre-esclave »). Dans ce mode de fonctionnement, une partie de l'énergie nécessaire au réseau HT 3 est produite par la pompe à chaleur 5, le gradient de température du fluide caloporteur provenant du réseau HT étant moins élevé que le gradient produit par la pompe à chaleur 5. Le transfert est fait via l'échangeur de chaleur 14 avec la modulation de la vanne mélangeuse V2. Avec cette combinaison il est possible de produire de chaleur pour une unité qui est défectueuse par le biais du réseau HT.

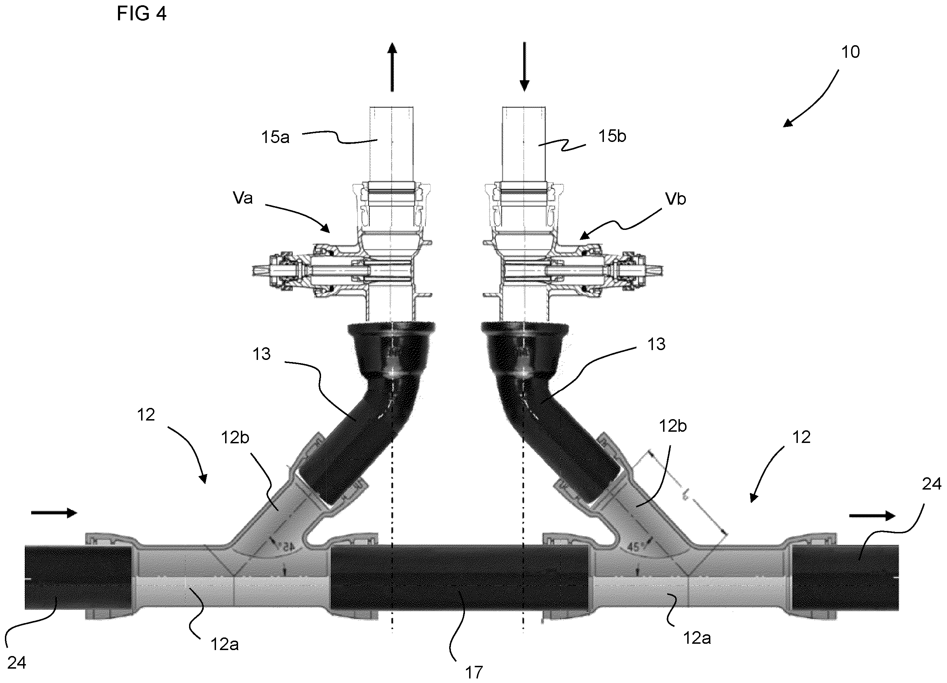

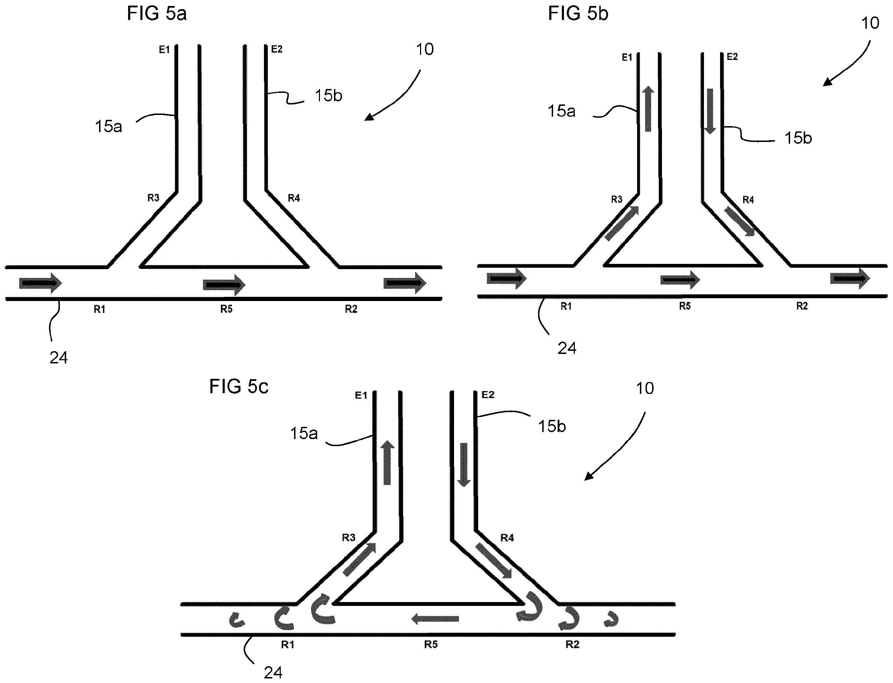

Faisant référence à la figure 4 et 5a à 5c, un dispositif de branchement (piquage) 10 d'un circuit hydraulique, notamment du circuit hydraulique du réseau anergie 2, est illustré. Le dispositif de branchement permet de connecter le réseau anergie 2 à une unité d'interconnexion hydraulique 8 d'un bâtiment, notamment via l'échangeur de chaleur 7.

Le dispositif de branchement 10 comprend deux raccords de branchement trois voies 12 interconnectant un tube principal 24 à deux tubes de branchement 15a, 15b connectés hydrauliquement à l'échangeur de chaleur 7 couplé au circuit de connexion basse température 18 de l'unité d'interconnexion hydraulique 8.

Le raccord de branchement trois voies 12 comprend une partie de tube en ligne 12a et une partie de tube en angle 12b. La partie de tube en ligne 12a est montée en ligne avec le monotube 24 du réseau anergie 2, les emboitures aux extrémités de la partie de tube en ligne 12a ayant un diamètre nominal du tube 24 du réseau anergie.

La partie de tube en angle 12b peut avoir un diamètre plus petit que le monotube 12a et est orienté de tel façon que le sens du fluide caloporteur du réseau anergie 2 ait un angle de dérivation de sortie du tube 24, respectivement d'entrée dans le tube 24, entre 30 degrés et 60 degrés, de préférence environ 45 degrés.

L'angle de dérivation de la partie de tube en angle 12 permet de réduire la perte de charge sur le flux de liquide caloporteur du réseau anergie en réduisant la turbulence dans les flux linéaire et dérivés.

Un tube de liaison 17 entre les deux raccords de branchement trois voies 12 peut être de diamètre nominal identique au tube 24 réseau anergie avec une longueur minimal permettant une distance minimale entre les deux tubes sortant de branchement 15a, 15b afin de permettre de la pose des deux vannes d'arrêt Va, Vb, un sur chaque tube de branchement 15a, 15b.

Dans une variante, les deux raccords de branchement 12 et le tube de liaison 17 peuvent être formés d'une seule pièce.

La partie de tube en angle 12b est connecté à l'un des tubes de branchement 15a, 15b via un tube de liaison coudé 13 qui permet de connecter le raccord aux tubes de branchement s'étendant orthogonalement par rapport au monotube 24 du réseau anergie 2.

Dans une variante, le raccord de branchement 12 et le tube de liaison coudé 13 peuvent être formés d'une seule pièce.

Dans une variante, l'ensemble formé par les deux raccords de branchement 12, le tube de liaison 17 et les tubes de liaison coudés 13 peut être en une seule pièce.

Le dispositif de branchement 10 permet avantageusement un piquage hydraulique du fluide caloporteur circulant dans le réseau anergie 2 selon les besoins en minimisant la perte de charge.

Faisant référence à la figure 5a, lorsqu'aucune demande d'énergie n'est demandée par une unité d'interconnexion hydraulique 8 d'un bâtiment, tout le flux caloporteur passe dans le tube principal 24 du réseau anergie 2 sans dérivation vers l'unité d'interconnexion hydraulique 8. De cette façon l'efficience est maximale car on n'utilise aucune consommation parasite pour alimenter un bâtiment qui ne demande pas d'énergie du réseau anergie 2. La pompe P4 sur le réseau anergie 4, qui peut par exemple être pilotée par un automate programmable via un variateur de fréquence, fonctionne à sa vitesse minimale avec une consommation électrique également minimale. La pompe P3 sur le circuit de branchement à travers l'échangeur de chaleur 7, qui peut par exemple aussi être pilotée par un automate programmable via un variateur de fréquence, ne fonctionne pas, et par conséquent a une consommation nulle. Les vannes d'entrée Va et de sortie **Vb** des tubes de branchement dans ce mode d'opération peuvent être fermées.

Faisant référence à la figure 5b, lorsqu'une demande d'énergie est demandée par une unité d'interconnexion hydraulique 8 d'un bâtiment, une fraction du flux caloporteur du réseau anergie 2 est dérivé dans les branchements 15a, 15b vers l'échangeur de chaleur 7 couplé au circuit de connexion basse température 18 de l'unité d'interconnexion hydraulique 8. Le flux caloporteur qui est dérivé est pompé par la pompe P3 sur le circuit de branchement de tel façon à obtenir la meilleure efficience possible sur la pompe à chaleur 5 du bâtiment concerné en évitant que le flux puisse ré-circuler du tube de branchement de sortie 15b via le tube de liaison 17 vers le tube de branchement d'entrée 15a.

Faisant référence à la figure 5c, lorsque la demande énergétique par une ou plusieurs unités d'interconnexion hydraulique 8 d'un ou plusieurs bâtiments est faible, la pompe principale P4 du réseau anergie 2 peut être arrêtée et la pompe de circulation P3 sur le circuit de branchement est en fonction. Le flux du fluide caloporteur est dans ce cas faible et le transfert thermique peut se faire avec le flux ré-circulant du tube de branchement de sortie 15b via le tube de liaison 17 vers le tube de branchement d'entrée 15a. Dans ce cas de figure, l'efficience globale est élevée mais avec une puissance de transfert énergétique limitée, ce qui est souvent le cas en été par exemple.

### Liste des références

Système de distribution d'énergie thermique 1
**réseau de distribution (à distance) d'énergie thermique basse température 2 (réseau Anergie)**
   monotube 24
**réseau de distribution d'énergie thermique haute température 3 (réseau HT)**
   tubes 26a, 26b
**réseau d'eau chaude bâtiment 4**
   réseau de chauffage bâtiment 4a
   réseau d'eau chaude sanitaire (réseau ECS) 4b
      ballon ECS
**pompe à chaleur 5**
   circuit évaporateur 5a
      entrée 28a
      sortie 28b
   circuit condenseur 5b
      entrée 30a
      sortie 30b
**système de Mesure, Contrôle, et Régulation (système MCR) 6 échangeur de chaleur 7**
**unité d'interconnexion hydraulique 8**
   échangeur de chaleur 14
   circuit de connexion haute température 16
      entrée 32a
      sortie 32b
   circuit de connexion basse température 18
      pompe **P1**
      entrée 34a
      sortie 34b
   circuit de connexion chauffage 20
      pompe **P2**
      entrée 36a
      sortie 36b
      dérivation échangeur de chaleur 38
   circuit de connexion pompe à chaleur 22
      circuit évaporateur 22a
         entrée 28a
         sortie 28b
      circuit condenseur 22b
         entrée 30a
         sortie 30b
   vannes mélangeuses **V1, V2**
**circuit hydraulique 9**
   **dispositif de branchement (piquage) 10**
   **raccord de branchement trois voies 12**
      partie de tube en ligne 12a
      partie de tube en angle 12b
   tube de liaison coudé 13
   tube de liaison 17
   **tube de branchement d'entrée 15a**
      vanne d'entrée **Va**
   **tube de branchement de sortie 15b**
      vanne de sortie **Vb**

## Revendications

1. **Unité d'interconnexion hydraulique** (8) pour un système de distribution d'énergie thermique (1) d'un bâtiment connecté à un réseau de distribution à distance d'énergie thermique basse température (2), dit "réseau anergie", le bâtiment comprenant un réseau de distribution d'énergie thermique haute température (3), dit "réseau HT", un réseau d'eau chaude bâtiment (4) et une pompe à chaleur (5), l'unité d'interconnexion hydraulique comprenant :
- un échangeur de chaleur (14) ;
- un circuit de connexion haute température (16) passant à travers l'échangeur de chaleur (14) et comprenant une entrée (32a) et une sortie (32b) ;
- un circuit de connexion basse température (18) comprenant une entrée (34a) et une sortie (34b),
- un circuit de connexion chauffage (20) comprenant une entrée (36a) et une sortie (36b), et
- un circuit de connexion pompe à chaleur (22) comprenant un circuit évaporateur (22a) avec une entrée (28a) et une sortie (28b) et un circuit condenseur (22b) avec une entrée (30a) et une sortie (30b), l'entrée (36a) du circuit de connexion chauffage étant connecté à la sortie (30b) du circuit condenseur du circuit de connexion pompe à chaleur (22), l'entrée (28a) du circuit évaporateur (22a) étant connecté à la sortie (34b) du circuit de connexion basse température (18);
l'unité d'interconnexion hydraulique (8) comprenant en outre :
- une première vanne mélangeuse (V1) interconnectant l'entrée (34a) du circuit de connexion basse température (18) à l'entrée (32a) du circuit de connexion haute température (16) et à la sortie (28b) du circuit évaporateur (22a) de sorte à pouvoir injecter du fluide caloporteur venant du circuit de connexion basse température (18) dans le circuit de connexion haute température (16), et
- une deuxième vanne mélangeuse (V2) interconnectant l'entrée (36a) du circuit de connexion chauffage (20), via une dérivation (38) passant par l'échangeur de chaleur (14), et l'entrée (30a) du circuit condenseur (22b), à la sortie (36b) du circuit de connexion chauffage (20) afin de pouvoir injecter du fluide caloporteur passant par l'échangeur de chaleur (14) avec le fluide caloporteur retournant du circuit condenseur (22b).

2. Unité d'interconnexion hydraulique selon la revendication précédente **caractérisée en ce que** le circuit évaporateur (22a) comprend une pompe (P1) installé dans l'unité d'interconnexion hydraulique pour la circulation du fluide caloporteur du circuit évaporateur.

3. Unité d'interconnexion hydraulique selon l'une quelconque des revendications précédentes **caractérisée en ce que** le circuit condenseur (22b) comprend une pompe (P2) installé dans l'unité d'interconnexion hydraulique pour la circulation du fluide caloporteur du circuit condenseur.

4. **Procédé de fonctionnement** d'une unité d'interconnexion hydraulique selon l'une quelconque des revendications précédentes, comprenant plusieurs modes de fonctionnement, un mode de fonctionnement comprenant la production d'eau chaude pour le réseau d'eau chaude bâtiment (4), **caractérisée en ce que,** le circuit de connexion basse température (18) est raccordé au réseau anergie (2) qui fournit l'énergie nécessaire au circuit évaporateur (22a) de la pompe à chaleur (5), le circuit condenseur (22b) de la pompe à chaleur portant la température du fluide caloporteur du réseau d'eau chaude bâtiment (4) à la température souhaitée pour permettre d'atteindre une consigne de température choisie, la première vanne mélangeuse (V1) étant dans une position dans laquelle la déviation du fluide caloporteur du circuit de connexion basse température (18) à travers l'échangeur de chaleur (14) est fermée, et la deuxième vanne mélangeuse (V2) étant dans une position dans laquelle la déviation du fluide caloporteur du circuit de connexion chauffage (20) à travers l'échangeur de chaleur (14) est fermée.

5. Procédé selon la revendication précédente, **caractérisée en ce que** le circuit condenseur (22b) de l'unité d'interconnexion hydraulique comprend une pompe (P2) installé dans l'unité d'interconnexion hydraulique pour la circulation du fluide caloporteur du circuit condenseur, un mode de fonctionnement comprend la production d'eau chaude pour le réseau d'eau chaude bâtiment (4) en utilisant le réseau de distribution d'énergie thermique haute température (3), le transfert énergétique étant réalisé par l'intermédiaire de l'échangeur de chaleur (14), le transfert thermique étant contrôlé par la modulation de vitesse de la pompe (P2) de circulation du circuit d'eau de chauffage.

6. Procédé selon l'une quelconque des revendications précédentes, **caractérisée en ce que** un mode de fonctionnement comprend la production d'eau chaude pour le réseau d'eau chaude bâtiment (4) avec une mode sécurité lorsque la température du réseau anergie (2) est inférieure à 0°C, les deux vannes mélangeuses (V1, V2) étant pilotés par un système de mesure, contrôle, et régulation (MCR) (6) connecté électriquement à l'unité d'interconnexion hydraulique (8) pour ajuster le transfert thermique du circuit condenseur (5b) de la pompe à chaleur au circuit évaporateur (5a) par l'entremise de l'échangeur de chaleur (14) afin de maintenir une température du fluide caloporteur à la sortie (28b) du circuit évaporateur à une température constante, le débit des deux fluides caloporteurs du circuit condenseur et du circuit évaporateur étant ajustés pour permettre d'obtenir ladite température.

7. Procédé selon l'une quelconque des revendications précédentes, **caractérisée en ce que** un mode de fonctionnement comprend un rafraichissement naturel sans le fonctionnement de la pompe à chaleur, dit "free cooling", selon lequel la production d'eau froide nécessaire au circuit de connexion chauffage est amenée du réseau anergie, le fluide caloporteur du circuit de connexion basse température (18) couplé au réseau anergie étant dévié, au moins en partie, par la première vanne mélangeuse (V1) à travers l'échangeur de chaleur, et le fluide caloporteur du circuit de connexion chauffage est dévié, au moins en partie, par la deuxième vanne mélangeuse (V2) à travers l'échangeur de chaleur, le débit des deux fluides caloporteurs étant ajustés pour permettre d'obtenir la température de consigne souhaitée.

8. Procédé selon l'une quelconque des revendications précédentes, **caractérisée en ce que** un mode de fonctionnement comprend la production de froid via le réseau de distribution d'énergie thermique haute température (3) couplé à une source de froid, le transfert énergétique étant réalisé par l'intermédiaire de l'échangeur de chaleur et contrôlé par la modulation de vitesse d'une pompe (P2) de circulation du circuit d'eau de chauffage et/ou la modulation de vitesse d'une pompe (P5) de circulation du fluide caloporteur du circuit HT (3).

9. Procédé selon l'une quelconque des revendications précédentes, **caractérisée en ce que** un mode de fonctionnement comprend la production d'eau chaude pour le réseau d'eau chaude bâtiment (4) en utilisant le réseau de distribution d'énergie thermique haute température (3) en combinaison avec la pompe à chaleur (5), le fluide caloporteur du réseau de distribution d'énergie thermique haute température (3) étant injecté dans le circuit évaporateur de la pompe à chaleur, le circuit ce connexion basse température (18) couplé au réseau anergie (2) étant en marche.

10. Procédé selon l'une quelconque des revendications précédentes, **caractérisée en ce que** un mode de fonctionnement comprend la production d'eau chaude pour le réseau d'eau chaude bâtiment (4) en utilisant le réseau de distribution d'énergie thermique HT (3) en combinaison avec la pompe à chaleur (5), le gradient de température du fluide caloporteur provenant du réseau HT étant plus élevé que le gradient de température produit par la pompe à chaleur, le transfert thermique via l'échangeur de chaleur (14) étant contrôlé avec la modulation de la deuxième vanne mélangeuse (V2).

11. Procédé selon l'une quelconque des revendications précédentes, **caractérisée en ce que** un mode de fonctionnement comprend la production d'eau chaude pour le réseau d'eau chaude bâtiment (4) en utilisant le réseau de distribution d'énergie thermique HT (3) en combinaison avec la pompe à chaleur (5) pour alimenter un autre bâtiment, une partie de l'énergie nécessaire au réseau HT étant produite par la pompe à chaleur, le gradient de température du fluide caloporteur provenant du réseau HT étant moins élevé que le gradient produit par la pompe à chaleur, le transfert thermique via l'échangeur de chaleur (14) étant contrôlé avec la modulation de la deuxième vanne mélangeuse (V2).

12. **Système de distribution d'énergie thermique** (1) d'un bâtiment comprenant une unité d'interconnexion hydraulique selon l'une quelconque des revendications précédentes 1-3 et un système de connexion d'un circuit hydraulique d'un réseau anergie (2) à une unité d'interconnexion hydraulique (8) d'un bâtiment, comprenant un dispositif de branchement (10) comportant deux raccords de branchement trois voies (12) interconnectant un tube principal (24) du réseau anergie à deux tubes de branchement (15a, 15b) connectés hydrauliquement à l'échangeur de chaleur (7), le raccord de branchement trois voies comprenant une partie de tube en ligne (12a) montée en ligne avec le tube principal du réseau anergie et une partie de tube en angle (12b) orienté de tel façon que le sens du fluide caloporteur du réseau anergie ait un angle de dérivation de sortie du tube principal, respectivement d'entrée dans le tube principal, entre 30 degrés et 60 degrés, de préférence environ 45 degrés.

13. Système de distribution d'énergie thermique selon la revendication précédente **caractérisée en ce qu'**il comprend un système de mesure, contrôle, et régulation (MCR) (6) connecté électriquement à l'unité d'interconnexion hydraulique (8) pour commander des pompes et vannes de l'unité d'interconnexion hydraulique en fonction de températures mesurés et des consignes de commande d'opération du système.

14. Système de distribution d'énergie thermique selon l'une des deux revendications précédentes, comprenant une vanne d'arrêt (Va, Vb) sur au moins une desdites tubes de branchement (15a, 15b).

## Patentansprüche

1. Hydraulische Verbindungseinheit (8) für ein System zur Verteilung von Wärmeenergie (1) eines Gebäudes, das mit einem als "Anergienetz" bezeichneten Netz zur Fernverteilung von Niedrigtemperatur-Wärmeenergie (2) verbunden ist, wobei das Gebäude ein als HT-Netz bezeichnetes Netz zur Verteilung von Hochtemperatur-Wärmeenergie (3), ein Gebäude-Warmwassernetz (4) und eine Wärmepumpe (5) umfasst, wobei die hydraulische Verbindungseinheit umfasst:
- einen Wärmetauscher (14);
- einen Hochtemperatur-Verbindungskreis (16), der durch den Wärmetauscher (14) verläuft und einen Einlass (32a) und einen Auslass (32b) umfasst;
- einen Niedrigtemperatur-Verbindungskreis (18), der einen Einlass (34a) und einen Auslass (34b) umfasst;
- einen Heiz-Verbindungskreis (20), der einen Einlass (36a) und einen Auslass (36b) umfasst; und
- einen Wärmepumpen-Verbindungskreis (22), der einen Verdampferkreis (22a) mit einem Einlass (28a) und einem Auslass (28b) und einen Kondensatorkreis (22b) mit einem Einlass (30a) und einem Auslass (30b) umfasst, wobei der Einlass (36a) des Heiz-Verbindungskreises mit dem Auslass (30b) des Kondensatorkreises des Wärmepumpen-Verbindungskreises (22) verbunden ist, wobei der Einlass (28a) des Verdampferkreises (22a) mit dem Auslass (34b) des Niedrigtemperatur-Verbindungskreises (18) verbunden ist;
wobei der hydraulische Verbindungseinheit (8) ferner umfasst:
- ein erstes Mischventil (V1) das den Einlass (34a) des Niedrigtemperatur-Verbindungskreises (18) mit dem Einlass (32a) des Hochtemperatur-Verbindungskreises (16) und mit dem Auslass (28b) des Verdampferkreises (22a) derart miteinander verbindet, dass vom Niedrigtemperatur-Verbindungskreis (18) kommendes Wärmeträgerfluid in den Hochtemperatur-Verbindungskreis (16) einleitbar ist, und
- ein zweites Mischventil (V2), das den Einlass (36a) des Heiz-Verbindungskreises (20) über eine Umleitung (38), die durch den Wärmetauscher (14) verläuft, und den Einlass (30a) des Kondensatorkreises (22b) mit dem Auslass (36b) des Heiz-Verbindungskreises (20) verbindet, um Wärmeträgerfluid, das durch dem Wärmetauscher (14) verläuft, mit dem Wärmeträgerfluid, das vom Kondensatorkreis (22b) zurückkehrt, einleiten zu können.

2. Hydraulische Verbindungseinheit nach vorangehendem Anspruch, **dadurch gekennzeichnet, dass** der Verdampferkreis (22a) eine Pumpe (P1) umfasst, die in der hydraulischen Verbindungseinheit für die Zirkulation des Wärmeträgerfluids des Verdampferkreises installiert ist.

3. Hydraulische Verbindungseinheit nach einem der vorangehenden Ansprüche, **dadurch gekennzeichnet, dass** der Kondensatorkreis (22b) eine Pumpe (P2) umfasst, die in der hydraulischen Verbindungseinheit für die Zirkulation des Wärmeträgerfluids des Kondensatorkreises installiert ist.

4. Verfahren für den Betrieb einer hydraulischen Verbindungseinheit nach einem der vorangehenden Ansprüche, die mehrere Betriebsmodi umfasst, wobei ein Betriebsmodus die Erzeugung von warmem Wasser für das Gebäude-Warmwassernetz (4) umfasst, **dadurch gekennzeichnet, dass** der Niedrigtemperatur-Verbindungskreis (18) an das Anergienetz (2) angeschlossen ist, das die für den Verdampferkreis (22a) der Wärmepumpe (5) notwendige Energie bereitstellt, wobei der Kondensatorkreis (22b) der Wärmepumpe die Temperatur des Wärmeträgerfluids des Gebäude-Warmwassernetzes (4) auf die gewünschte Temperatur bringt, um zu erlauben, einen gewählten Temperatursollwert zu erreichen, wobei das erste Mischventil (V1) in einer Position ist, in der die Umleitung des Wärmeträgerfluids des Niedrigtemperatur-Verbindungskreises (18) durch den Wärmetauscher (14) geschlossen ist, und das zweite Mischventil (V2) in einer Position ist, in der die Umleitung des Wärmeträgerfluids des Heiz-Verbindungskreises (20) durch den Wärmetauscher (14) geschlossen ist.

5. Verfahren nach vorangehendem Anspruch, **dadurch gekennzeichnet, dass** der Kondensatorkreis (22b) der hydraulischen Verbindungseinheit eine Pumpe (P2) umfasst, die in der hydraulischen Verbindungseinheit für die Zirkulation des Wärmeträgerfluids des Kondensatorkreises installiert ist, wobei ein Betriebsmodus die Erzeugung von warmem Wasser für das Gebäude-Warmwassernetz (4) unter Verwendung des Hochtemperatur-Wärmeenergie-Verteilernetzes (3) umfasst, wobei der Energietransfer über den Wärmetauscher (14) durchgeführt wird, wobei der Wärmetransfer durch die Modulation der Geschwindigkeit der Zirkulationspumpe (P2) des Heizwasserkreises gesteuert wird.

6. Verfahren nach einem der vorangehenden Ansprüche, **dadurch gekennzeichnet, dass** ein Betriebsmodus die Erzeugung von warmem Wasser für das Gebäude-Warmwassernetz (4) mit einem Sicherheitsmodus umfasst, wenn die Temperatur des Anergienetzes (2) unter 0°C ist, wobei die zwei Mischventile (V1, V2) von einem Mess-, Steuer- und Regelsystem (MSR) (6) gesteuert werden, das mit der hydraulischen Verbindungseinheit (8) elektrisch verbunden ist, um den Wärmetransfer vom Kondensatorkreis (5b) der Wärmepumpe zum Verdampferkreis (5a) durch Zwischenstellung des Wärmetauschers (14) anzupassen, um eine Temperatur des Wärmeträgerfluids am Auslass (28b) des Verdampferkreises auf einer konstanten Temperatur zu halten, wobei der Durchfluss der zwei Wärmeträgerfluide des Kondensatorkreises und des Verdampferkreises angepasst wird, um zu erlauben, die Temperatur zu erhalten.

7. Verfahren nach einem der vorangehenden Ansprüche, **dadurch gekennzeichnet, dass** ein Betriebsmodus eine als "free cooling" bezeichnete natürliche Kühlung ohne Betrieb der Wärmepumpe umfasst, der gemäß die für den Heiz-Verbindungskreis notwendige Kaltwassererzeugung vom Anergienetz zugeführt wird, wobei das Wärmeträgerfluid des Niedrigtemperatur-Verbindungskreises (18), der an das Anergienetz gekoppelt ist, mindestens zum Teil vom ersten Mischventil (V1) durch den Wärmetauscher umgeleitet wird, und das Wärmeträgerfluid des Heiz-Verbindungskreises mindestens zum Teil vom zweiten Mischventil (V2) durch den Wärmetauscher umgeleitet wird, wobei der Durchfluss der zwei Wärmeträgerfluide angepasst wird, um zu erlauben, den gewünschten Temperatursollwert zu erhalten.

8. Verfahren nach einem der vorangehenden Ansprüche, **dadurch gekennzeichnet, dass** ein Betriebsmodus die Erzeugung von Kälte über das Hochtemperatur-Wärmeenergie-Verteilernetz (3) umfasst, das an eine Kältequelle gekoppelt ist, wobei der Energietransfer über den Wärmetauscher durchgeführt und durch die Modulation der Geschwindigkeit einer Zirkulationspumpe (P2) des Heizwasserkreises und/oder die Modulation der Geschwindigkeit einer Zirkulationspumpe (P5) des Wärmeträgerfluids des HT-Kreises (3) gesteuert wird.

9. Verfahren nach einem der vorangehenden Ansprüche, **dadurch gekennzeichnet, dass** ein Betriebsmodus die Erzeugung von warmem Wasser für das Gebäude-Warmwassernetz (4) unter Verwendung des Hochtemperatur-Wärmeenergie-Verteilernetzes (3) in Kombination mit der Wärmepumpe (5) umfasst, wobei das Wärmeträgerfluid des Hochtemperatur-Wärmeenergie-Verteilernetzes (3) in den Verdampferkreis der Wärmepumpe eingeleitet wird, wobei der an das Anergienetz (2) gekoppelte Niedrigtemperatur-Verbindungskreis im Betrieb ist.

10. Verfahren nach einem der vorangehenden Ansprüche, **dadurch gekennzeichnet, dass** ein Betriebsmodus die Erzeugung von warmem Wasser für das Gebäude-Warmwassernetz (4) unter Verwendung des HT-Wärmeenergie-Verteilernetzes (3) in Kombination mit der Wärmepumpe (5) umfasst, wobei der Temperaturgradient des vom HT-Netz kommenden Wärmeträgerfluids höher ist als der von der Wärmepumpe erzeugte Temperaturgradient, wobei der Wärmetransfer über den Wärmetauscher (14) mit der Modulation des zweiten Mischventils (V2) gesteuert wird.

11. Verfahren nach einem der vorangehenden Ansprüche, **dadurch gekennzeichnet, dass** ein Betriebsmodus die Erzeugung von warmem Wasser für das Gebäude-Warmwassernetz (4) unter Verwendung des HT-Wärmeenergie-Verteilernetzes (3) in Kombination mit der Wärmepumpe (5) umfasst, um ein anderes Gebäude zu versorgen, wobei ein Teil der für das HT-Netz notwendigen Energie von der Wärmepumpe erzeugt wird, wobei der Temperaturgradient des vom HT-Netz kommenden Wärmeträgerfluids niedriger ist als der von der Wärmepumpe erzeugte Gradient, wobei der Wärmetransfer über den Wärmetauscher (14) mit der Modulation des zweiten Mischventils (V2) gesteuert wird.

12. System zur Verteilung thermischer Energie (1) eines Gebäudes, umfassend eine hydraulische Verbindungseinheit nach einem der vorangehenden Ansprüche 1 bis 3 und ein Verbindungssystem eines Hydraulikkreises eines Anergienetzes (2) mit einer hydraulische Verbindungseinheit (8) eines Gebäudes, umfassend eine Abzweigungsvorrichtung (10), die zwei Dreiwege-Abzweigungsanschlüsse (12) umfasst, die ein Hauptrohr (24) des Anergienetzes mit zwei Abzweigungsrohren (15a, 15b) verbindet, die mit dem Wärmetauscher (7) hydraulisch verbunden sind, wobei der Dreiwege-Abzweigungsanschluss einen linearen Rohrabschnitt (12a) umfasst, der linear mit dem Hauptrohr des Anergienetzes und einem abgewinkelten Rohrabschnitt (12b) angebracht ist, der derart ausgerichtet ist, dass die Richtung des Wärmeträgerfluids des Anergienetzes einen Auslass-Abzweigungswinkel aus dem Hauptrohr beziehungsweise Einlass-Abzweigungswinkel in das Hauptrohr hat, der zwischen 30 Grad und 60 Grad, vorzugsweise bei zirka 45 Grad, liegt.

13. System zur Verteilung thermischer Energie nach vorangehendem Anspruch, **dadurch gekennzeichnet, dass** es ein Mess-, Steuer- und Regelsystem (MSR) (6) umfasst, das mit der hydraulischen Verbindungseinheit (8) elektrisch verbunden ist, um Pumpen und Ventile der hydraulischen Verbindungseinheit in Abhängigkeit von den gemessenen Temperaturen und den Betriebssteuerungssollwerten des Systems zu steuern.

14. System zur Verteilung thermischer Energie nach einem der zwei vorangehenden Ansprüche, umfassend ein Sperrventil (Va, Vb) auf mindestens einem der Abzweigungsrohre (15a, 15b).

## Claims

1. A hydraulic interconnection unit (8) for a thermal energy distribution system (1) of a building connected to a low-temperature thermal energy remote distribution network (2) called "anergy network", the building comprising a high-temperature thermal energy distribution network (3) called "HT network", a building hot-water network (4) and a heat pump (5), the hydraulic interconnection unit comprising:
- a heat exchanger (14);
- a high-temperature connection circuit (16) passing through the heat exchanger (14) and comprising an inlet (32a) and an outlet (32b);
- a low-temperature connection circuit (18) comprising an inlet (34a) and an outlet (34b),
- a heating connection circuit (20) comprising an inlet (36a) and an outlet (36b), and
- a heat pump connection circuit (22) comprising an evaporator circuit (22a) with an inlet (28a) and an outlet (28b) and a condenser circuit (22b) with an inlet (30a) and an outlet (30b), the inlet (36a) of the heating connection circuit being connected to the outlet (30b) of the condenser circuit of the heat pump connection circuit (22), the inlet (28a) of the evaporator circuit (22a) being connected to the outlet (34b) the low-temperature connection circuit (18);
the hydraulic interconnection unit (8) further comprising:
- a first mixing valve (V1) interconnecting the inlet (34a) of the low-temperature connection circuit (18) to the inlet (32a) of the high-temperature connection circuit (16) and to the outlet (28b) of the evaporator circuit (22a) so as to be able to inject heat transfer fluid coming from the low-temperature connection circuit (18) into the high-temperature connection circuit (16), and
- a second mixing valve (V2) interconnecting the inlet (36a) of the heating connection circuit (20), via a bypass (38) passing through the heat exchanger (14), and the inlet (30a) of the condenser circuit (22b), to the outlet (36b) of the heating connection circuit (20) in order to be able to inject heat transfer fluid passing through the heat exchanger (14) with the heat transfer fluid returning from the condenser circuit (22b).

2. The hydraulic interconnection unit according to the preceding claim, **characterized in that** the evaporator circuit (22a) comprises a pump (P1) installed in the hydraulic interconnection unit for the circulation of the coolant of the evaporator circuit.

3. The hydraulic interconnection unit according to any one of the preceding claims, **characterized in that** the condenser circuit (22b) comprises a pump (P2) installed in the hydraulic interconnection unit for the circulation of the coolant of the condenser circuit.

4. A method for operating a hydraulic interconnection unit according to any one of the preceding claims, comprising several operating modes, one operating mode comprising the production of hot water for the building hot-water network (4), **characterized in that** the low-temperature connection circuit (18) is connected to the anergy network (2) which provides the energy necessary for the evaporator circuit (22a) of the heat pump (5), the condenser circuit (22b) of the heat pump bringing the temperature of the heat transfer fluid from the building hot-water network (4) to the desired temperature to make it possible to reach a chosen temperature setpoint, the first mixing valve (V1) being in a position in which the diversion of the heat transfer fluid from the low-temperature connection circuit (18) through the heat exchanger (14) is closed, and the second mixing valve (V2) being in a position in which the diversion of the heat transfer fluid from the heating connection circuit (20) through the heat exchanger (14) is closed.

5. The method according to the preceding claim, **characterized in that** the condenser circuit (22b) of the hydraulic interconnection unit comprises a pump (P2) installed in the hydraulic interconnection unit for the circulation of the heat transfer fluid from the condenser circuit, an operating mode comprises the production of hot water for the building hot-water network (4) by using the high-temperature thermal energy distribution network (3), the energy transfer being carried out via the heat exchanger (14), the heat transfer being monitored by the speed modulation of the circulation pump (P2) of the heating water circuit.

6. The method according to any one of the preceding claims, **characterized in that** an operating mode comprises the production of hot water for the building hot-water network (4) with a safety mode when the temperature of the anergy network (2) is less than 0°C, the two mixing valves (V1, V2) being driven by a measurement, monitoring and regulation (MMR) system (6) electrically connected to the hydraulic interconnection unit (8) to adjust the heat transfer from the condenser circuit (5b) of the heat pump to the evaporator circuit (5a) through the heat exchanger (14) in order to maintain a temperature of the heat transfer fluid at the outlet (28b) of the evaporator circuit at a constant temperature, the flow rate of the two heat transfer fluids from the condenser circuit and from the evaporator circuit being adjusted to make it possible to obtain said temperature.

7. The method according to any one of the preceding claims, **characterized in that** an operating mode comprises a natural cooling without the operation of the heat pump called free cooling, according to which the production of cold water necessary for the heating connection circuit is brought from the anergy network, the heat transfer fluid from the low-temperature connection circuit (18) coupled to the anergy network being diverted, at least partly, by the first mixing valve (V1) through the heat exchanger, and the heat transfer fluid from the heating connection circuit is diverted, at least partly, by the second mixing valve (V2) through the heat exchanger, the flow rate of the two heat transfer fluids being adjusted to make it possible to obtain the desired setpoint temperature.

8. The method according to any one of the preceding claims, **characterized in that** an operating mode comprises the production of cold via the high-temperature thermal energy distribution network (3) coupled to a cold source, the energy transfer being carried out via the heat exchanger and monitored by the speed modulation of a circulation pump (P2) of the heating water circuit and/or the speed modulation of a circulation pump (P5) of the heat transfer fluid from the HT circuit (3).

9. The method according to any one of the preceding claims, **characterized in that** an operating mode comprises the production of hot water for the building hot-water network (4) by using the high-temperature thermal energy distribution network (3) in combination with the heat pump (5), the heat transfer fluid from the high-temperature thermal energy distribution network (3) being injected into the evaporator circuit of the heat pump, the low-temperature connection circuit (18) coupled to the anergy network (2) being in operation.

10. The method according to any one of the preceding claims, **characterized in that** an operating mode comprises the production of hot water for the building hot-water network (4) by using the HT thermal energy distribution network (3) in combination with the heat pump (5), the temperature gradient of the heat transfer fluid coming from the HT network being higher than the temperature gradient produced by the heat pump, the heat transfer via the heat exchanger (14) being monitored with the modulation of the second mixing valve (V2).

11. The method according to any one of the preceding claims, **characterized in that** an operating mode comprises the production of hot water for the building hot-water network (4) by using the HT thermal energy distribution network (3) in combination with the heat pump (5) to supply another building, part of the energy necessary for the HT network being produced by the heat pump, the temperature gradient of the heat transfer fluid coming from the HT network being lower than the gradient produced by the heat pump, the heat transfer via the heat exchanger (14) being monitored with the modulation of the second mixing valve (V2).

12. A thermal energy distribution system (1) of a building comprising a hydraulic interconnection unit according to any one of the preceding claims 1-3 and a system for connecting a hydraulic circuit of an anergy network (2) to a hydraulic interconnection unit (8) of a building, comprising a branching device (10) including two three-way adaptor fittings (12) interconnecting a main tube (24) of the anergy network to two branching tubes (15a, 15b) hydraulically connected to the heat exchanger (7), the three-way adaptor fitting comprising an in-line tube part (12a) mounted in line with the main tube of the anergy network and an angled tube part (12b) oriented in such a way that the direction of the heat transfer fluid from the anergy network has a bypass angle for exiting the main tube, respectively for entering the main tube, between 30 degrees and 60 degrees, preferably about 45 degrees.

13. The thermal energy distribution system according to the preceding claim, **characterized in that** it comprises a measurement, monitoring and regulation (MMR) system (6) electrically connected to the hydraulic interconnection unit (8) to control pumps and valves of the hydraulic interconnection unit according to measured temperatures and to the system operation control setpoints.

14. The thermal energy distribution system according to any of the two preceding claims, comprising a shut-off valve (Va, Vb) on at least one of said branching tubes (15a, 15b).
